# EUROPÄISCHE PATENTSCHRIFT

(11) **EP 1 050 675 B1**
(45) Veröffentlichungstag und Bekanntmachung des Hinweises auf die Patenterteilung: **12.06.2002**
(21) Anmeldenummer: 00104841.2
(22) Anmeldetag: 07.03.2000
(51) Int. Cl.: F02D 41/02

(54) **Abgasreinigungsanlage mit Stickoxidadsorber und Desulfatisierungsverfahren hierfür**
Exhaust gas purification device comprising a nitrogen oxide adsorber and method for desulphatizing therefore
Dispositif d'épuration des gaz d'échappement comprenant un piège à oxydes de carbone et procédé de desulfatation correspondant

(30) Priorität: 05.05.1999 DE 19920515
(43) Veröffentlichungstag der Anmeldung: 08.11.2000
(73) Patentinhaber: DaimlerChrysler AG, 70567 Stuttgart (DE)
(72) Erfinder: Hertzberg, Andreas, 70374 Stuttgart (DE); Voigtländer, Dirk, Dr., 70825 Korntal-Münchingen (DE)

(56) Entgegenhaltungen:
- EP-A- 0 893 154
- DE-A- 19 837 074

## Beschreibung

Die Erfindung bezieht sich auf eine Abgasreinigungsanlage mit Stickoxidadsorber nach dem Oberbegriff des Anspruchs 1 sowie auf ein Verfahren zur Desulfatisierung des Stickoxidadsorbers.

Abgasreinigungsanlagen dieser Art werden beispielsweise in Kraftfahrzeugen mit Verbrennungsmotor zur Reinigung der von diesem emittierten Abgase eingesetzt, sind jedoch auch zur Reinigung der Abgase andersartiger Verbrennungsquellen verwendbar. Der Stickoxidadsorber dient der Minimierung von Stickoxidemissionen. Dazu wird in Betriebsphasen mit vermehrter Stickoxidbelastung des Abgases, wie dies im Magerbetrieb eines Verbrennungsmotors vor allem wegen unzureichender Umsetzung in einem Dreiwegekatalysator der Fall ist, Stickoxid im Stickoxidadsorber zwischengespeichert, um aus diesem in einer hierfür geeignet eingestellten späteren Betriebsphase, wie im Fettbetrieb eines Verbrennungsmotors, wieder mittels eines Desorptionsvorgangs freigesetzt und anschließend z.B. in einer Reduktionsreaktion zu Stickstoff umgewandelt werden zu können. Unter Mager- bzw. Fettbetrieb ist hierbei wie üblich ein Betrieb der Verbrennungsquelle mit magerem bzw. fettem Motorluftverhältnis zu verstehen, d.h. mit oberhalb bzw. unterhalb des stöchiometrischen Wertes liegendem Luft/Kraftstoff-Verhältnis des in der Verbrennungsquelle verbrannten Luft/Kraftstoff-Gemischs.

Eine bekannte Schwierigkeit solcher Anlagen besteht darin, daß aufgrund von Schwefel, der in üblichen Kraftstoffen und Motorölen enthalten ist, Schwefeldioxid im Abgas vorliegt, das durch Sulfatbildung zu einer Schwefelvergiftung des Stickoxidadsorbers führen kann, die dessen Stickoxid-Speicherkapazität mit der Zeit herabsetzt. Es ist daher bekannt, den Stickoxidadsorber immer dann, wenn er in seiner Stickoxid-Speicherkapazität merklich nachläßt, einem Desulfatisierungsvorgang zu unterziehen, um ihn von dem angelagerten Sulfat zu befreien. Dabei soll der Begriff Stickoxidadsorber vorliegend sowohl den Fall umfassen, daß dieser aus einem einzigen Adsorberkörper besteht, als auch den gleichermaßen bekannten Fall, daß dem Stickoxid-Adsorberkörper eine sogenannte SOₓ-Falle vorgeschaltet ist, welche die Schwefeloxide zwischenspeichert und so vom Stickoxid-Adsorberkörper fernhält und in analoger Weise von Zeit zu Zeit einer Desulfatisierung unterzogen wird.

Zur Desulfatisierung des Stickoxidadsorbers ist es bekannt, die Abgaszusammensetzung von mager auf fett umzustellen, z.B. durch entsprechende Betriebsumstellung der Verbrennungsquelle, und die Temperatur im Abgasstrang zu erhöhen, z.B. durch einen zu höheren Abgastemperaturen führenden Betrieb der Verbrennungsquelle und/oder durch eine elektrische Heizeinrichtung. Ein derartiges Desulfatisierungsverfahren ist in der Offenlegungsschrift EP 0 636 770 A1 beschrieben. Weitere, ähnliche Desulfatisierungsverfahren, die zusätzlich eine Sekundärluftzuführung oder einen geteilten Betrieb eines die Verbrennungsquelle darstellenden, mehrzylindrigen Verbrennungsmotors mit zu einem Teil fett und zum übrigen Teil mager betriebenen Zylindern sind in der Offenlegungsschrift DE 195 22 165 A1 und den älteren, nicht vorveröffentlichten deutschen Patentanmeldungen Nr. 197 47 222.2 und 198 02 631.5 beschrieben.

Während der Desulfatisierung des Stickoxidadsorbers gelangen somit Schwefelverbindungen in das den Stickoxidadsorber verlassende Abgas, wobei insbesondere Schwefeldioxid und Schwefelwasserstoff auftreten. Letzterer hat bekanntermaßen einen stechenden Geruch und führt bereits bei geringen Konzentrationen zu einer Geruchsbelästigung.

Eine in der Patentschrift EP 0 581 279 B1 offenbarte Abgasreinigungsanlage beinhaltet stromabwärts eines Stickoxidadsorbers einen weiteren Katalysatorkörper mit sauerstoffzwischenspeichernder und oxidierender Funktion. Dieser Katalysatorkörper dient dazu, während der Stickoxid-Desorptionsphasen des Stickoxidadsorbers Kohlenwasserstoffe und Kohlenmonoxid, die eventuell noch in dem aus dem Stickoxidadsorber austretenden Abgas enthalten sind, zu oxidieren. In Betriebsphasen mit magerer Abgaszusammensetzung, d.h. im allgemeinen in den Stickoxidadsorptionsphasen des Stickoxidadsorbers, kann dieser oxidierende Katalysator Sauerstoff aus dem Abgas zwischenspeichern, der dann für das spätere Oxidieren von Kohlenwasserstoffen bzw. Kohlenmonoxid zur Verfügung steht.

In der Offenlegungsschrift EP 0 893 154 A2 ist ebenfalls eine Abgasreinigungsanlage mit einem Stickoxidspeicher oder Stickoxidspeicherkatalysator offenbart, dem ein Oxidationskatalysator nachgeschaltet ist, der sauerstoffzwischenspeichernd ausgelegt sein kann. Ein weiterer Oxidationskatalysator ist dem Stickoxidspeicher bzw. Stickoxidspeicherkatalysator vorgeschaltet. Zur Desulfatisierung des Stickoxidspeichers wird dort vorgeschlagen, zunächst abgastemperatursteigernde Maßnahmen für den vorgeschalteten Oxidationskatalysator einzuleiten, bis eine Desulfatisierungs-Mindestabgastemperatur erreicht ist, um dann für den anschließenden Desulfatisierungsbetrieb bleibend einen nahezu sauerstofffreien, d.h. fetten Abgasstrom mit gewissem CO-Gehalt einzustellen. Dies wird beispielsweise durch bleibende Drosselung des Dieselmotor während der Desulfatisierung auf einen fetten Betrieb mit unter eins liegendem Lambdawert bewirkt.

In der Offenlegungsschrift DE 198 37 074 A1 ist eine Abgasreinigungsanlage mit Stickoxidfalle beschrieben, die von Zeit zu Zeit dadurch desulfatisiert wird, dass sie zunächst in einer Heizphase auf eine erhöhte Temperatur gebracht wird, wonach dann während einer anschließenden Regenerationsphase für eine vorbestimmte Dauer ein bleibend fettes Luft-/Kraftstoffgemisch eingeregelt wird. Die Regelung des Luft-/Kraftstoffgemischs kann durch eine in der Stickoxidfalle angeordnete Lamdasonde unterstützt werden.

Der Erfindung liegt als technisches Problem die Bereitstellung einer Abgasreinigungsanlage der eingangs genannten Art und eines für deren Strickoxidadsorber geeigneten Desulfatisierungsverfahrens zugrunde, bei denen sich der Stickoxidadsorber wirksam desulfatisieren lässt und gleichzeitig dafür gesorgt ist, dass keine nicht oxidierten Schefelverbindungen in unerwünschter Menge im nach außen abgegebenen Abgas verbleiben.

Die Erfindung löst dieses Problem durch die Bereitstellung einer Abgasreinigungsanlage mit den Merkmalen des Anspruchs 1 sowie eines Desulfatisierungsverfahrens mit den Merkmalen des Anspruchs 4.

Bei der Abgasreinigungsanlage nach Anspruch 1 sind die Desulfatisierungsmittel zur Einstellung einer oszillierend fetten und mageren Abgaszusammensetzung während eines jeweiligen Desulfatisierungsvorgangs eingerichtet und beinhalten einen dem Stickoxidadsorber nachgeschalteten Sauerstoffzwischenspeicher. Mit diesen Maßnahmen sind die Desulfatisierungsmittel in der Lage, den Stickoxidadsorber wirksam zu desulfatisieren, sobald dies jeweils notwendig ist, um seine Stickoxid-Speicherfähigkeit zu erhalten, ohne dass dabei nennenswerte Mengen an Schwefelwasserstoff oder anderen nicht oxidierten Schwefelverbindungen im nach außen abgegebenen Abgas verbleiben. Während der Magerbetriebsphasen der Desulfatisierung kann der Sauerstoffzwischenspeicher im Abgas enthaltenen Sauerstoff aufnehmen und zwischenspeichern. Während der Fettbetriebsphasen des jeweiligen Desulfatisierungsvorgangs kann der in den Stickoxidadsorber hauptsächlich in Sulfatform eingelagerte Schwefel wieder freigesetzt werden. Dadurch entstehender Schwefelwasserstoff und/oder andere nicht oxidierte Schefelverbindungen können dann mit vom Sauerstoffzwischenspeicher abgegebenem Sauerstoff oxidiert und damit beseitigt werden. Vorzugsweise wird diese Schwefeloxidation durch ein geeignetes Oxidationskatalysatormaterial unterstützt, das im Sauerstoffzwischenspeicher selbst oder in einem nachgeschalteten Katalysatorkörper vorgesehen sein kann. Zur Durchführung der Desulfatisierung des Stickoxidadsorbers eignet sich insbesondere das Verfahren nach Anspruch 4.

Speziell ist bei einer nach Anspruch 2 weitergebildeten Abgasreinigungsanlage der Sauerstoffzwischenspeicher von einem herkömmlichen Oxidationskatalysator oder Dreiwegekatalysator mit Sauerstoffspeicherfähigkeit gebildet. Dieser Katalysator speichert während den Magerbetriebsphasen der Desulfatisierung Sauerstoff ein und verwendet diesen in den Fettbetriebsphasen zur Oxidation des Schwefelwasserstoffs und eventueller weiterer Schwefelverbindungen. Bei dieser Anlage läßt sich der Stickoxidadsorber insbesondere durch ein nach Anspruch 5 weitergebildetes Verfahren desulfatisieren.

Bei einer nach Anspruch 3 weitergebildeten Abgasreinigungsanlage weisen die Desulfatisierungsmittel eine dem Sauerstoffzwischenspeicher nachgeschaltete Lambdasonde und Mittel zur Steuerung des Sauerstoffanteils im Abgas, auch als Abgasluftverhältnis bezeichnet, in Abhängigkeit vom Meßsignal der Lambdasonde auf. Dadurch kann während der Desulfatisierung immer dann von fetter auf magere Abgaszusammensetzung umgestellt werden, wenn im Sauerstoffzwischenspeicher kein Sauerstoff mehr vorhanden ist, und von magerer auf fette Abgaszusammensetzung, wenn der Sauerstoffzwischenspeicher wieder mit Sauerstoff beladen ist. Diese Vorgehensweise entspricht einem nach Anspruch 6 weitergebildeten Desulfatisierungsverfahren.

Eine vorteilhafte Ausführungsform der Erfindung ist in den Zeichnungen dargestellt und wird nachfolgend beschrieben. Hierbei zeigen:
- Fig. 1: ein schematisches Blockdiagramm einer Verbrennungseinrichtung mit zugeordneter Abgasreinigungsanlage mit Stickoxid-Adsorberkatalysator und nachgeschaltetem Dreiwegekatalysator und
- Fig. 2 bis 4: zeitsynchrone, schematische Diagramme des zeitlichen Verlaufs des Abgasluftverhältnisses stromaufwärts vom Dreiwegekatalysator, der im Dreiwegekatalysator gespeicherten Sauerstoffmenge bzw. des Meßsignals einer stromabwärts vom Dreiwegekatalysator positionierten Lambdasonde während eines Desulfatisierungsvorgangs.

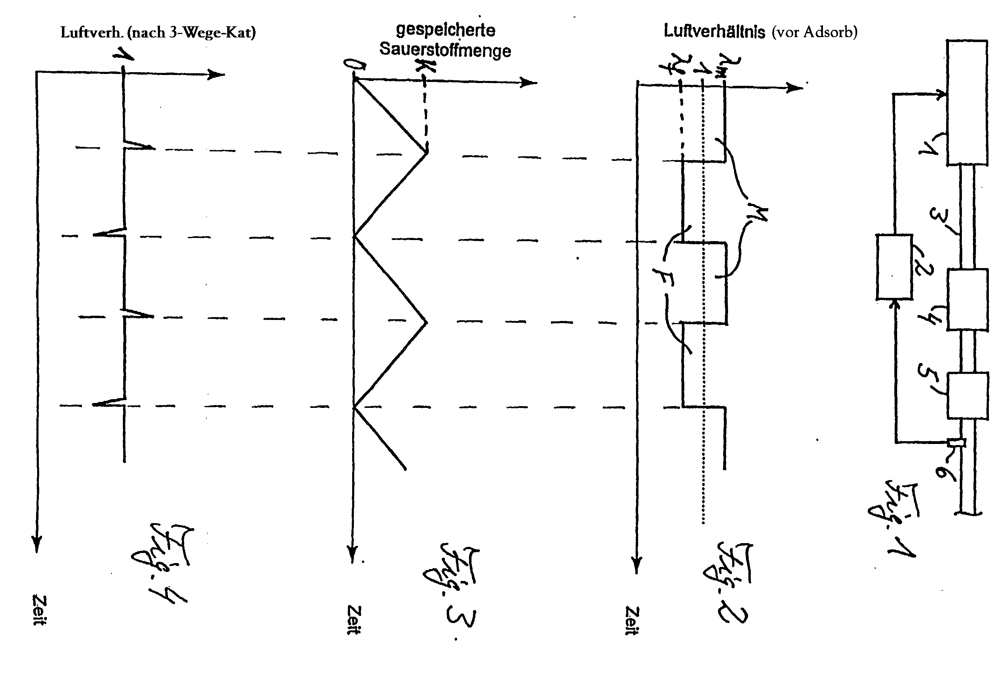

Fig. 1 zeigt schematisch eine Verbrennungseinrichtung in Form einer Verbrennungsquelle 1, der eine Verbrennungssteuereinheit 2 und eine Abgasreinigungsanlage zugeordnet ist. Die Verbrennungsquelle 1 kann z.B. ein Kraftfahrzeug-Verbrennungsmotor sein, insbesondere ein mager betriebener Ottomotor oder ein Dieselmotor. In diesem Fall wird die Verbrennungssteuereinheit 2 von einem entsprechenden Motorsteuergerät gebildet.

Die Abgasreinigungsanlage beinhaltet einen im Abgasstrang 3 der Verbrennungsquelle 1 liegenden katalytischen Stickoxidadsorber, d.h. einen Stickoxid-Adsorberkatalysator 4, und einen stromabwärts davon im Abgasstrang 3 positionierten, sauerstoffspeicherfähigen Dreiwegekatalysator 5. An der Austrittsseite des Dreiwegekatalysators 5 befindet sich eine Lambdasonde 6, deren Ausgangssignal der Verbrennungssteuereinheit 2 zugeführt wird. Neben diesen Komponenten können weitere Komponenten der Verbrennungsquelle 1 und/oder der Abgasreinigungsanlage in herkömmlicher Weise vorgesehen sein, was hier nicht weiter von Interesse und daher nicht gezeigt ist.

Dem allgemeinen Wunsch nach minimalem Kraftstoffverbrauch entsprechend wird die Verbrennungsquelle 1 möglichst oft im Magerbetrieb gefahren, d.h. mit magerem Luft/Kraftstoff-Gemisch, soweit dies die Betriebssituation zuläßt. Der Magerbetrieb resultiert in der Regel in einer erhöhten Stickoxidbelastung des Abgases der Verbrennungsquelle 1, vor allem weil unter diesen Bedingungen keine ausreichende Umsetzung in einem Dreiwegekatalysator stattfindet. Der Adsorberkatalysator 4 dient dazu, diese Stickoxide durch Adsorption aus dem Abgasstrom zu entfernen. Sobald während dieses Adsorptionsbetriebs seine Stickoxidaufnahmefähigkeit erschöpft ist, wird auf Desorptionsbetrieb umgestellt. In der Desorptionsbetriebsphase wird der Adsorberkatalysator 4 regeneriert, indem die zuvor primär in Nitrat- oder Nitritform eingelagerten Stickoxide wieder desorbiert und umgewandelt werden. Für diese Umwandlung sind mehrere, hier nicht weiter interessierende, herkömmliche Vorgehensweisen möglich, wie Abgasrückführung oder katalytische Reduktion unter Zugabe eines geeigneten Reduktionsmittels, wie unverbrannter Kraftstoff oder Ammoniak über die Verbrennungsquelle 1 oder über eine externe Einspeisung direkt in den Abgasstrang 3. Nach vollständiger Desorption der Stickoxide kann dann wieder auf Adsorptionsbetrieb umgestellt werden. Durch Einstellen geeigneter Bedingungen läßt sich die Desorption relativ rasch ausführen, so daß die Desorptionsphasen gegenüber den Adsorptionsphasen relativ kurz gehalten werden können. Auf diese Weise wird der Adsorberkatalysator 4 alternierend im Adsorptions- und Desorptionsbetrieb gefahren.

Bei Verwendung schwefelhaltiger Brennstoffe für die Verbrennungsquelle 1, wie z.B. üblicher schwefelhaltiger Kraftstoffe für Kraftfahrzeug-Verbrennungsmotoren, wird neben Stickoxiden auch im Abgas enthaltener Schwefel in den Adsorberkatalysator 4 vor allem in Sulfatform eingelagert. Die Schwefeleinlagerung ist gegenüber den üblichen Stickoxiddesorptionsbedingungen ziemlich resistent, so daß der im Adsorptionsbetrieb eingelagerte Schwefel während des Stickoxid-Desorptionsbetriebs nicht vollständig freigesetzt wird. Da der eingelagerte Schwefel die Stickoxidadsorptionszentren des Adsorberkatalysators 4 blockiert, tritt mit der Zeit eine Schwefelvergiftung desselben auf, die dazu führt, daß dessen Stickoxidspeicherkapazität nachläßt. Wenn die Stickoxidspeicherkapazität auf diese Weise unter einen bestimmten Wert gesunken ist, wird daher ein Desulfatisierungsvorgang durchgeführt, in welchem der Adsorberkatalysator 4 über eine Zeitdauer, die typischerweise deutlich länger ist als diejenige einer jeweiligen Stickoxiddesorptionsphase, geeigneten Desulfatisierungsbedingungen unterworfen wird.

Charakteristischerweise beinhalten diese Desulfatisierungsbedingungen vorliegend die Einstellung einer zwischen fett und mager oszillierenden Abgaszusammensetzung, d.h. eines Abgasluftverhältnisses, das zwischen einem "Fettwert" kleiner als der stöchiometrische Wert eins und einem "Magerwert" größer als der stöchiometrische Wert eins oszilliert. Dies kann beispielsweise durch eine entsprechend oszillierende Einstellung des Luftverhältnisses für das in der Verbrennungsquelle 1 verbrannte Luft/Brennstoff-Gemisch bewirkt werden. Jede andere herkömmliche Technik für die Einstellung eines abwechselnd "fetten" und "mageren" Abgasluftverhältnisses ist ebenso einsetzbar, z.B. ein über die Desulfatisierung hinweg andauernder "Fettbetrieb" der Verbrennungsquelle 1 kombiniert mit einer zeitweisen Sekundärluftzufuhr oder eine zeitweise Reduktionsmittelzufuhr direkt in den Abgasstrang 3 zur Abgasanfettung etc. Zusätzlich zu diesen Maßnahmen wird für die Einhaltung einer geeigneten Desulfatisierungstemperatur von z.B. 600°C oder darüber gesorgt. Hierdurch werden die Sulfate instabil und können desorbiert werden, d.h. es gelangt vermehrt Schwefel in Form diverser Schwefelverbindungen in das Abgas.

Während der Phasen mit magerer Abgaszusammensetzung können die im Abgas enthaltenen Schwefelverbindungen durch den ebenfalls im Abgas enthaltenen Sauerstoff oxidiert werden. Außerdem kann überschüssiger Sauerstoff in den als Sauerstoffzwischenspeicher fungierenden Dreiwegekatalysator 5 eingespeichert werden. In den dazu alternierenden Phasen mit fetter Abgaszusammensetzung findet im Adsorberkatalysator 4 unter den eingestellten Desulfatisierungsbedingungen die Desorption des dort vor allem als Sulfat gespeicherten Schwefels statt. Gleichzeitig werden die im Abgas enthaltenen Schwefelverbindungen im nachgeschalteten Dreiwegekatalysator 5 oxidiert, wozu dort der zwischengespeicherte Sauerstoff freigesetzt wird. Auf diese Weise kann während des gesamten Desulfatisierungsvorgangs eine wirksame Oxidation störender Schwefelverbindungen erfolgen, insbesondere eine Umsetzung von Schwefelwasserstoff zu Wasser und Schwefeldioxid.

In den Fig. 2 bis 4 ist in schematisch idealisierter Diagrammdarstellung ein Abschnitt eines solchen Desulfatisierungsvorgangs illustriert. Im Diagramm von Fig. 2 ist anhand der Darstellung des zeitabhängigen Verlaufs des Abgasluftverhältnisses stromaufwärts des Adsorberkatalysators 4 gezeigt, wie dieses während eines Desulfatisierungsvorgangs zwischen einem mageren Wert λₘ größer als eins und einem fetten Wert λ_{f} kleiner als eins oszilliert, so daß sich Fettbetriebsphasen F, in denen die wirksame Schwefeldesorption im Adsorberkatalysator 4 und die Freisetzung von zwischengespeichertem Sauerstoff im Dreiwegekatalysator 5 erfolgen, und Magerbetriebsphasen M abwechseln, in denen Sauerstoff in den Dreiwegekatalysator 5 eingespeichert wird. Fig. 3 illustriert den Sauerstoffspeichervorgang im Dreiwegekatalysator 5 unter der vereinfachenden, idealisierten Annahme einer linearen zeitlichen Änderung der zwischengespeicherten Sauerstoffmenge. Im Magerbetrieb steigt die zwischengespeicherte Sauerstoffmenge bis zur maximalen Speicherkapazität K des Dreiwegekatalysators 5 an, während sie dann in den Fettbetriebsphasen F wieder abnimmt, indem Sauerstoff freigesetzt und zur Oxidation von Schwefelverbindungen genutzt wird.

Vorteilhafterweise erfolgt die Einstellung der oszillierenden Abgaszusammensetzung während des Desulfatisierungsvorgangs nach einer Regelungsstrategie, bei der die Fettbetriebsphasen F so lange beibehalten werden, wie noch Sauerstoff im Dreiwegekatalysator 5 gespeichert ist, und die Magerbetriebsphasen nur so lange beibehalten werden, wie noch freie Sauerstoff-Speicherplätze im Dreiwegekatalysator 5 vorhanden sind. Dies kann je nach Anwendungsfall zu unterschiedlichen Zeitanteilen für die Magerbetriebsphasen M einerseits und die Fettbetriebsphasen F andererseits führen.

Die Regelung der oszillierenden Abgaszusammensetzung nach dieser Strategie wird durch die Verwendung der Lambdasonde 6 stromabwärts des Dreiwegekatalysators 5 unterstützt, deren typisches Signalverhalten während der Desulfatisierung in Fig. 4 wiedergegeben ist. In den Fettbetriebsphasen F wird bedingt durch die Sauerstofffreisetzung im Dreiwegekatalysator 5 von der Lambdasonde 6 zunächst in etwa der stöchiometrische Wert eins für das Abgasluftverhältnis an der Austrittsseite des Dreiwegekatalysators 5 gemessen. Erst wenn kein Sauerstoff mehr im Dreiwegekatalysator 5 vorhanden ist, fällt das Lambdasondensignal ab. Dies indiziert für die Verbrennungssteuereinheit 2, der das Lambdasondensignal zugeführt ist, daß ein Wechsel zu einer Magerbetriebsphase erforderlich ist, da nicht mehr ausreichend Sauerstoff vorhanden ist, um die im Adsorberkatalysator 4 aufgrund der Desulfatisierungsbedingungen freigesetzten, im Abgas enthaltenen Schwefelverbindungen oxidieren zu können.

Dementsprechend schaltet die Verbrennungssteuereinheit 2 das System auf Magerbetrieb um, z.B. durch Wechsel von einem fetten zu einem mageren Luft/Brennstoff-Gemisch für die Verbrennungsquelle 1, gegebenenfalls kombiniert mit weiteren geeigneten verbrennungssteuernden Maßnahmen, wie dem Fachmann geläufig. Durch die beginnende Magerbetriebsphase steigt dann der von der Lambdasonde 6 gemessene Lambdawert rasch wieder auf den stöchiometrischen Wert eins an, da überschüssiger Sauerstoff im stromaufwärtigen Dreiwegekatalysator 5 zwischengespeichert wird. Erst wenn dieser seine maximale Sauerstoff befüllung erreicht hat und somit kein weiterer Sauerstoff mehr in ihn eingespeichert werden kann, verbleibt überschüssiger Sauerstoff im Abgasstrom und führt dazu, daß das Lambdasondensignal über den den stöchiometrischen Wert eins ansteigt.

Dies zeigt der Verbrennungssteuereinheit 2 an, daß der Dreiwegekatalysator 5 wieder.mit Sauerstoff befüllt ist und daher die Magerbetriebsphase M beendet werden kann. Sie schaltet folglich wieder durch geeignete, dem Fachmann geläufige, verbrennungssteuernde Maßnahmen auf die nächste Fettbetriebsphase F um, mit welcher die effektive Desulfatisierung des Stickoxidadsorbers 4 fortgesetzt werden kann. Durch die Umschaltung auf Fettbetrieb F, in welchem wieder Sauerstoff aus dem Dreiwegekatalysator 5 freigesetzt wird, fällt das Lambdasondensignal rasch wieder auf den stöchiometrischen Wert eins ab. Das oben beschriebene Verhalten des Lambdawertes stromabwärts des Dreiwegekatalysators 5, d.h. des Sondensignals der Lambdasonde 6, ist in Fig. 4 zeitsynchron zu den Diagrammen der Fig. 2 und 3 veranschaulicht.

Die obige Beschreibung eines vorteilhaften Beispiels macht deutlich, daß durch die erfindungsgemäße Abgasreinigungsanlage eine effektive Reinigung eines Verbrennungsabgases insbesondere von Stickoxiden unter Einsatz eines Stickoxidadsorbers bewirkt werden kann, wobei zudem der Stickoxidadsorber durch Desulfatisierungsvorgänge mit zwischen mager und fett oszillierender Abgaszusammensetzung effektiv desulfatisiert werden kann, wenn er in seiner Stickoxidadsorptionsfähigkeit durch eingelagerten Schwefel nachgelassen hat. Durch das Zwischenschalten von Phasen mit magerer Abgaszusammensetzung während eines Desulfatisierungsvorgangs kann Sauerstoff in einem dem Stickoxidadsorber nachgeschalteten Katalysatorkörper mit Sauerstoffspeicherfähigkeit zwichengespeichert und in den Fettbetriebsphasen zur Oxidation von Schwefelverbindungen, insbesondere von Schwefelwasserstoff, genutzt werden, so daß eine Emission solcher Schwefelverbindungen vermieden wird. Statt des gezeigten Dreiwegekatalysators ist z.B. auch ein reiner Oxidationskatalysator verwendbar.

## Patentansprüche

1. Abgasreinigungsanlage für eine Verbrennungseinrichtung, insbesondere einen Kraftfahrzeug-Verbrennungsmotor, mit
- einem Stickoxidadsorber (4) und
- Desulfatisierungsmitteln zur Durchführung von Desulfatisierungsvorgängen für den Stickoxidadsorber,
**dadurch gekennzeichnet, daß**
- die Desulfatisierungsmittel zur Einstellung einer oszillierend fetten und mageren Abgaszusammensetzung während eines jeweiligen Desulfatisierungsvorgangs eingerichtet sind und einen dem Stickoxidadsorber (4) nachgeschalteten Sauerstoffzwischenspeicher (5) umfassen.

2. Abgasreinigungsanlage nach Anspruch 1, weiter
**dadurch gekennzeichnet, daß**
der Sauerstoffzwischenspeicher (5) von einem sauerstoffspeicherfähigen Oxidationskatalysator oder Dreiwegekatalysator gebildet ist.

3. Abgasreinigungsanlage nach Anspruch 1 oder 2, weiter
**dadurch gekennzeichnet, daß**
die Desulfatisierungsmittel eine stromabwärts des Sauerstoffzwischenspeichers (5) angeordnete Lambdasonde (6) und Abgasluftverhältnis-Steuerungsmittel (2) umfassen, welche die Abgaszusammensetzung während eines jeweiligen Desulfatisierungsvorgangs in Reaktion auf das Meßsignal der Lambdasonde oszillierend fett und mager einstellen.

4. Verfahren zur Desulfatisierung eines Stickoxidadsorbers (4) einer Abgasreinigungsanlage für eine Verbrennungseinrichtung, insbesondere einen Kraftfahrzeug-Verbrennungsmotor,
**dadurch gekennzeichnet, daß**
- die Abgaszusammensetzung durch entsprechenden Betrieb der Verbrennungseinrichtung (1) während des Desulfatisierungsvorgangs oszillierend fett und mager eingestellt wird und
- Sauerstoff während der Zeiträume mit magerer Abgaszusammensetzung in einem dem Stickoxidadsorber (4) nachgeschalteten Sauerstoffzwischenspeicher (5) zwischengespeichert und während der Zeiträume mit fetter Abgaszusammensetzung aus dem Sauerstoffzwischenspeicher zur Oxidation von Schwefelverbindungen freigesetzt wird.

5. Verfahren nach Anspruch 4, weiter
**dadurch gekennzeichnet**, d a ß
als Sauerstoffzwischenspeicher (5) ein sauerstoffspeicherfähiger Oxidationskatalysator oder Dreiwegekatalysator verwendet wird.

6. Verfahren nach Anspruch 4 oder 5, weiter
**dadurch gekennzeichnet, daß**
- das Abgasluftverhältnis stromabwärts des Sauerstoffzwischenspeichers (5) mittels einer Lambdasonde (6) erfaßt wird und
- die Abgaszusammensetzung oszillierend von fett auf mager bzw. von mager auf fett umgestellt wird, wenn das gemessene Abgasluftverhältnis stromabwärts des Sauerstoffzwischenspeichers vom stöchiometrischen Wert aus abzusinken bzw. anzusteigen beginnt.

## Claims

1. An exhaust emission control system for combustion device, in particular a motor vehicle internal combustion engine, with
- a nitrogen oxide adsorber (4) and
- desulphatisation means to carry out desulphatisation processes for the nitrogen oxide adsorber,
**characterised in that**
- the desulphatisation means are set up to switch back and forth between a rich and a lean exhaust emission composition during a desulphatisation process, and comprise a temporary oxygen storage device (5) connected downstream of the nitrogen oxide adsorber (4).

2. An exhaust emission control system in accordance with claim 1, further
**characterised in that**
the temporary oxygen storage device (5) is formed by an oxidation catalytic converter or a three-way catalytic converter.

3. An exhaust emission control system in accordance with claim 1 or 2, further
**characterised in that**
the desulphatisation means comprise a lambda probe (6) positioned downstream of the temporary oxygen storage device (5) and exhaust emission air ratio controlling means (2) which switch the composition of the exhaust emissions back and forth between rich and lean during a desulphatisation process in reaction to the control signal of the lambda probe.

4. A process for the desulphatisation of a nitrogen oxide adsorber (4) in an exhaust emission control system for a combustion device, in particular a motor vehicle internal combustion engine,
**characterised in that**
- the exhaust emission composition is switched back and forth between rich and lean by the appropriate operation of the combustion device (1) during the desulphatisation process and
- oxygen is temporarily stored in a temporary oxygen storage device (4) positioned downstream of the nitrogen oxide adsorber during periods of lean exhaust emissions and released from the temporary oxygen storage device in order to oxidise sulphur compounds during periods of rich exhaust emissions.

5. A process in accordance with claim 4, further
**characterised in that**
an oxidation catalytic converter or three-way catalytic converter capable of storing oxygen is used as the temporary oxygen storage device (5).

6. A process in accordance with claim 4 or 5, further
**characterised in that**
- the exhaust emission air ratio downstream of the temporary oxygen storage device (5) is determined by means of a lambda probe (6) and
- the exhaust emission composition is switched back and forth from rich to lean or from lean to rich if the stoichiometric value of the exhaust emission air ratio determined downstream of the temporary oxygen storage device starts to fall or to rise.

## Revendications

1. Installation d'épuration de gaz d'échappement pour un dispositif de combustion, en particulier un moteur de combustion de véhicule automobile, avec
- un adsorbeur d'oxydes d'azote (4) et
- des moyens de désulfatation pour la mise en oeuvre de processus de désulfatation pour l'adsorber d'oxydes d'azote,
**caractérisée en ce que**
- les moyens de désulfatation sont agencés pour l'établissement d'une composition des gaz d'échappement oscillant entre riche et pauvre pendant chaque processus de désulfatation et comprennent un réservoir intermédiaire d'oxygène (5) branché en aval de l'adsorbeur d'oxydes d'azote (4).

2. Installation d'épuration de gaz d'échappement selon la revendication 1, **caractérisée en outre en ce que** le réservoir intermédiaire d'oxygène (5) est formé par un catalyseur d'oxydation ou un catalyseur à trois voies capable de stocker l'oxygène.

3. Installation d'épuration de gaz d'échappement selon la revendication 1 ou 2, **caractérisée en outre en ce que** les moyens de désulfatation comprennent une sonde lambda (6) disposée en aval du réservoir intermédiaire d'oxygène (5) et des moyens de commande du rapport gaz d'échappement-air (2) qui font osciller la composition des gaz d'échappement entre riche et pauvre pendant chaque processus de désulfatation en réaction au signal de mesure de la sonde lambda.

4. Procédé pour désulfater un adsorbeur d'oxydes d'azote (4) d'une installation d'épuration des gaz d'échappement pour un dispositif de combustion, en particulier un moteur de combustion de véhicule automobile, **caractérisé en ce que**
- la composition des gaz d'échappement est amenée à osciller entre riche et pauvre par un fonctionnement correspondant du dispositif de combustion (1) pendant le processus de désulfatation et
- de l'oxygène est stocké de manière intermédiaire dans un réservoir intermédiaire d'oxygène (5) branché en aval de l'adsorbeur d'oxyde d'azote (4) au cours des périodes à composition des gaz d'échappement pauvre et est libéré depuis le réservoir intermédiaire d'oxygène pour l'oxydation de composés soufrés au cours des périodes à composition des gaz d'échappement riche.

5. Procédé selon la revendication 4, **caractérisé en outre en ce qu'**un catalyseur d'oxydation ou un catalyseur à trois voies capable de stocker l'oxygène est utilisé comme réservoir intermédiaire d'oxygène (5).

6. Procédé selon la revendication 4 ou 5, **caractérisé en outre en ce que**
- le rapport gaz d'échappement-air est déterminé en aval du réservoir intermédiaire d'oxygène (5) au moyen d'une sonde lambda (6) et
- la composition des gaz d'échappement est amenée à osciller de riche à maigre ou de maigre à riche quand le rapport gaz d'échappement-air mesuré en aval du réservoir intermédiaire d'oxygène commence à baisser ou à monter depuis la valeur stoechiométrique.
